# EUROPÄISCHE PATENTSCHRIFT

(11) **EP 3 887 784 B1**
(45) Veröffentlichungstag und Bekanntmachung des Hinweises auf die Patenterteilung: **10.01.2024**
(21) Anmeldenummer: 19801300.5
(22) Anmeldetag: 07.11.2019
(51) Int. Cl.: G01K 13/12

(54) **SENSORFLASCHE**
SENSOR BOTTLE
BOUTEILLE DE CAPTEUR

(30) Priorität: 28.11.2018 DE 102018130125
(43) Veröffentlichungstag der Anmeldung: 06.10.2021
(73) Patentinhaber: PremiumWineTech GmbH, 71636 Ludwigsburg (DE)
(72) Erfinder: FRANKE, Thomas, 71640 Ludwigsburg (DE)
(74) Vertreter: Glawe, Delfs, Moll
(86) Internationale Anmeldenummer: PCT/EP2019/080558
(87) Internationale Veröffentlichungsnummer: WO 2020/108947

(56) Entgegenhaltungen:
- FR-A1- 2 895 082
- US-A- 4 104 916

## Beschreibung

### Technisches Gebiet

Die vorliegende Erfindung betrifft einen Sensorbehälter, insb. zum Überwachen von Lagerungsbedingungen alkoholhaltiger Getränke wie Wein.

### Beschreibung des Standes der Technik

Alkoholhaltige Getränke und insbesondere Weine bedürfen guter und stabiler Lagerbedingungen, um zu einem hochwertigen Produkt reifen zu können. Selbst in privaten Weinkellern haben sich daher Einrichtungen zur Messung von Umgebungsparametern wie insb. Luftfeuchtigkeit und Lagertemperatur durchgesetzt.

Insb. Wein ist vergleichsweise empfindlich, wenn die Lagerbedingungen sich nicht in vorgegebenen Grenzen halten. Unter "Wein" in diesem Zusammenhang ist jedes aus Rebenvergärung gewonnene Produkt zu verstehen und umfasst insb. neben "normalen" Weinen auch Schaumweine, Perlweine, Eis- bzw. Süßweine, Likörweine (Portweine, Madeira, Sherry, usw.), aber auch weinhaltige oder weinähnliche Getränke.

Eine wesentliche Lagerbedingung stellt die Umgebungstemperatur dar; diese sollte im Sommer 20 °C nicht übersteigen und im Winter nicht unter 5 °C sinken. Zu hohe Temperaturen führen zur Verflüchtigung eines Teils der im Wein gebundenen Kohlensäure samt Aromastoffen. Eine zu niedrige Temperatur begünstigt das Ausfallen der Weinsäure. Diese lagert sich dann in Kristallen am Boden ab. Idealerweise herrscht das gesamte Jahr eine gleichmäßige und nur um wenige Grad schwankende Lagertemperatur vor.

Weitere zu berücksichtigende Parameter bei der Lagerung sind die Luftfeuchtigkeit (insb. bei langjähriger Lagerung) sowie die Lichtverhältnisse, da vor allem die UV-Strahlung der Weinqualität nicht zuträglich ist. Auch zu viel Erschütterung tut dem Wein nicht gut.

Um die Lagerbedingungen zu überwachen, existieren Messstationen mit geeigneten Sensoren, die im Weinkeller aufgestellt werden und die Entwicklung von Temperatur, Luftfeuchtigkeit, Lichteinstrahlung (nicht verbreitet) usw. messen und ggf. aufzeichnen (analog oder digital).

Die FR 2 895 082 A1 offenbart eine Vorrichtung zur Überprüfung der Dichtheit von Behältern, insb. Weinflaschen, und deren Verkorkung über die Zeit, ohne diese zu ändern. Hierzu sieht die bekannte Vorrichtung die Messung eventueller Druck- und Temperaturschwankungen im Inneren des Behälters vor. Zu diesem Zwecke umfasst die Vorrichtung einen oder mehrere Sender-Sensoren, die vor dem Verschließen in den (die) Behälter eingeführt werden und die Druck und Temperatur messen. Sie senden diese Messungen per Funk an einen (oder mehrere) Empfänger, die ihrerseits mit einem Computersystem verbunden sind, das die Daten verarbeitet und verwaltet, um den Benutzer zu informieren.

Aus der US 4,104,916 ist eine Vorrichtung zum Messen der Temperatur einer geöffneten Weinflasche bekannt. Die bekannte Vorrichtung kombiniert ein Thermometer und einen Schutzbehälter zur Aufbewahrung des Thermometers. Der obere Teil des Behälters ist so gestaltet, dass er den Anzeigekopf des Thermometers aufnehmen kann, und er ist außerdem so gestaltet, dass er mit dem Thermometer verwendet werden kann, um die Flaschenöffnung zu versiegeln, wenn das Thermometer in Gebrauch ist. Die Temperaturanzeigeskala des Thermometers ist in farbcodierte Segmente unterteilt, wobei jedes Segment die Farbe des Weins angibt, der bei Temperaturen innerhalb des dem Segment entsprechenden Bereichs serviert werden sollte.

### Zusammenfassung der Erfindung

Ausgehend hiervon werden erfindungsgemäß ein Sensorbehälter mit den Merkmalen des Anspruchs 1 und ein Verfahren zum Überwachen von Lagerungsbedingungen alkoholhaltiger Getränke mit den Merkmalen des Anspruchs 7 vorgeschlagen.

Der Erfindung liegt die Erkenntnis zugrunde, dass die existierenden Messstationen oder -einheiten die Lagerbedingungen im Raum der Lagerung, aber nicht im Medium "Wein" selbst messen. Die Weinflüssigkeit ist jedoch im Hinblick auf eine Überwachung der Lagertemperatur ein wesentlich trägeres Medium als die Luft im Raum der Lagerung (d.h. des Weinkellers oder anderen Raumes, in dem der Wein dauerhaft gelagert wird). Für eine Aussage über die tatsächliche Reifung und Lagerfähigkeit des Weins wird somit mit einer externen Messstation keine wirklich zuverlässige Aussage getroffen, da faktisch nur die Umgebungstemperatur und nicht die Weintemperatur gemessen wird. Demgegenüber kann nun erfindungsgemäß eine zuverlässige Aussage über die Temperatur des (im Vergleich zu der Umgebungsluft deutlich temperaturträgeren) Mediums Wein sowie die Dauer und Stärke etwaiger Temperaturschwankungen im Medium Wein selbst getroffen werden.

Die Erfindung sieht hierfür eine Sensoranordnung mit einem Behältnis (Sensorbehälter) vor, in dessen Innerem ein Referenzfluid mit mindestens einem darin angeordneten Temperatursensor vorgesehen ist. Das Referenzfluid ist der Zusammensetzung des zu überwachenden Mediums nachempfunden und besteht aus einem Alkohol-/Wasser-Gemisch. Der Sensorbehälter kann in Form einer Flasche ausgebildet sein. Die Flasche der Sensoranordnung (vorliegend auch als "Sensorflasche" bezeichnet) kann in Form und Größe den zu überwachenden Weinflaschen nachempfunden sein. Bei Verzicht auf eine Flaschenform des Behälters kann dieser zumindest in seinen Dimensionen einer typischen Weinflaschengröße nachempfunden sein. Dies erleichtert die Anordnung des erfindungsgemäßen Sensorbehälters in einem Flaschen-/Weinregal.

Die Temperatur wird somit erfindungsgemäß innerhalb eines dem zu überwachenden Wein vergleichbaren, in einem Behälter angeordneten Mediums (dem Referenzfluid als Alkohol-/Wasser-Gemisch, ggf. zusätzlich Glykol) über mindestens einen Temperatursensor (Temperatursonde) gemessen. Hierzu können mehrere Temperatursensoren in dem Referenzfluid vorgesehen sein, um die Temperatur an entsprechend mehreren Stellen zu messen.

Durch die erfindungsgemäße Ausgestaltung des Behältnisses als Flaschenkörper kann die Sensoranordnung problemlos an dem relevanten Ort (d.h. zwischen den zu lagernden Flaschen) angeordnet werden. Die Flaschenform kann die Form einer Weinflasche im gewünschten "Format" annehmen, wie bspw. eine Champagner-Flasche, eine Riesling-Flasche, eine Bordeaux-Flasche usw.

Die Erfindung umfasst eine Elektronikeinheit zur Auswertung und Übertragung der Signale des mindestens einen Temperatursensors und eventueller weiterer vorhandener Sensoren. Dabei handelt es sich um eine dem Fachmann an sich bekannte Verarbeitungselektronik. Die von der Elektronik erzeugten Daten/Signale können bspw. an ein zentral oder dezentral vorgesehenes Auswertungssystem und/oder eine geeignete Speichereinheit übermittelt werden, bspw. mittels eines CAN-Busses, wie im Falle eines hauseigenen Wein-Regal-Steuerungssystems, oder auch kabellos über eine WLAN-Verbindung und Übermittlung an eine Cloud-Anwendung.

Der Innenraum des Sensorbehälters bzw. der Sensorflasche ist in einen Fluidbereich, in den das Referenzfluid eingebracht ist, und einen Trockenbereich, in dem die Elektronikeinheit angeordnet ist, unterteilt. In einer Ausführungsform kann die Elektronikeinheit bspw. den Behälter- bzw. Flaschenboden bilden oder in den Behälter- bzw. Flaschenboden integriert sein. In anderen Ausgestaltungen ist der Fluidbereich an den Behälter- bzw. Flaschenboden angrenzend ausgebildet.

Neben dem mindestens einen Temperatursensor können weitere Sensoren vorgesehen sein, wie bspw. mindesten ein einer Außenseite des Behälterkörpers zugeordneter Sensor zur Messung einer Temperatur und/oder relativen Luftfeuchtigkeit von Umgebungsluft. Bspw. kann auch ergänzend oder alternativ ein UV-Sensor zur Messung von UV-Strahlung der Umgebung vorgesehen sein. Diese Sensoren können bspw. in den Behälterkörper integriert sein, bei einem Flaschenkörper bspw. in den Bereich des Flaschenhalses, derart dass sie messaktiv zur Außenseite des Flaschenkörpers angeordnet sind.

Zudem ist es möglich, einen Erschütterungssensor in dem Sensorbehälter vorzusehen, bspw. in dem Referenzfluid aber alternativ auch in dem Trockenbereich.

Weitere Vorteile und Ausgestaltungen der Erfindung ergeben sich aus den Unteransprüchen, der Beschreibung und der beiliegenden Zeichnung.

Die Erfindung ist anhand eines Ausführungsbeispiels in der Zeichnung schematisch dargestellt und wird im folgenden unter Bezugnahme auf die Zeichnung ausführlich beschrieben.

### Kurzbeschreibung der Zeichnung

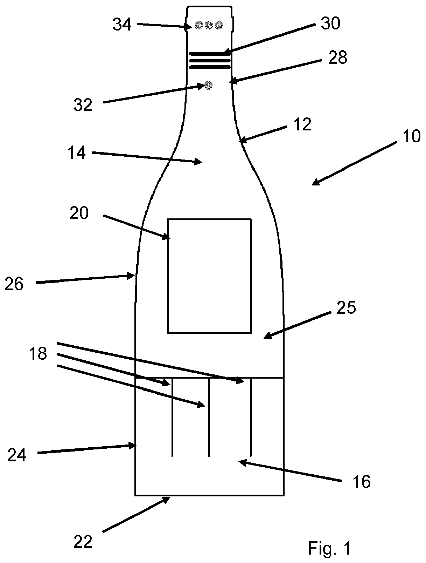

Figur 1 als einzige Figur zeigt eine stark schematische Darstellung eines erfindungsgemäßen Sensorbehälters in Form einer Sensorflasche.

### Ausführliche Beschreibung

Figur 1 zeigt in seitlicher Schnittdarstellung eine stark schematische Darstellung einer erfindungsgemäßen Sensorflasche 10. Die Sensorflasche 10 umfasst einen Flaschenkörper 12, der einen Innenraum 14 der Sensorflasche 10 definiert.

In dem Innenraum 14 der Sensorflasche 10 ist erfindungsgemäß ein Referenzfluid 16 vorgesehen. Des weiteren ist mindestens ein Temperatursensor 18 vorgesehen, der vollständig oder teilweise (zumindest mit einem messsensitiven Abschnitt) in dem Referenzfluid 16 angeordnet ist. In dem dargestellten Ausführungsbeispiel sind drei Temperatursensoren vorgesehen, die in dem Referenzfluid 16 angeordnet sind. Selbstverständlich liegt es im Ermessen des Fachmanns, die geeignete bzw. für eine konkrete Anwendung notwendige Anzahl von Sensoren 18 festzulegen.

Das Referenzfluid 16 dient zur Messung einer Referenztemperatur für Weinflaschen, die benachbart zu der Sensorflasche angeordnet und somit den gleichen Umgebungsbedingungen ausgesetzt sind. Um ein möglichst gutes Abbild der Temperaturverhältnisse in den benachbart gelagerten Weinflaschen zu erhalten, ist das Referenzfluid 16 der Zusammensetzung des zu überwachenden Weins nachempfunden. Bspw. besteht das Referenzfluid aus einer Wasser-/Alkohol-Mischung, die gegebenenfalls zusätzlich Glykol umfasst.

In dem dargestellten Ausführungsbeispiel ist der Innenraum 14 der Sensorflasche 10 in einen Trockenbereich 26 und einen Fluidbereich 24 unterteilt. Der Fluidbereich 24 ist in einem unteren Bereich des Flaschenkörpers 12, angrenzend an einen Flaschenboden 22 des Flaschenkörpers 12, ausgebildet. In den Fluidbereich 24 ist das Referenzfluid 16 eingebracht. Der Fluidbereich 24 ist mittels einer Trennwand 25 von dem in dem Flaschenkörpers 12 darüberliegend angeordneten Trockenbereich 26 getrennt. Der Trockenbereich 26 erstreckt sich bis in einen Flaschenhals 28 hinein. Das Referenzfluid 16 kann ggf. unter einem Druck in den Flaschenkörper 12 bzw. den Fluidbereich 24 eingebracht sein, der den Druckverhältnissen in einer zu überwachenden Weinflasche entspricht. Dabei wird berücksichtigt, dass bestimmte Weine wie etwa Schaumweine regelmäßig unter einem höheren Druck abgefüllt werden als reguläre Weine.

In dem Referenzfluid 16 sind - wie bereits erläutert - die Temperatursensoren 18 angeordnet. In dem Trockenbereich 26 ist eine Elektronikeinheit 20 angeordnet. Der mindestens eine Temperatursensor 18 kann bspw. an der Trennwand 25 befestigt sein und mittels (nicht dargestellten) flüssigkeitsdicht in den Trockenraum 26 geführten Leitungen mit der Elektronikeinheit 20 verbunden sein. Alternativ können selbstverständlich auch einer oder mehrere Sensoren mit drahtloser Übertragung verwendet werden.

Die Elektronikeinheit 20 dient zur Auswertung der von den Temperatursensoren 18 empfangenen Messsignale und zur Übertragung der Auswertungsdaten bzw. -signale an ein (nicht dargestelltes) außerhalb der Sensorflasche 10 befindliches Auswertungssystem und/oder eine geeignete Speichereinheit bzw. ein Steuerungssystem. Wie bereits voranstehend erläutert kann dieses System dezentral in dem Weinkeller bzw. -lagerort oder in räumlicher Nähe dazu angeordnet sein. Alternativ kann eine Datenübertragung auch über WLAN an eine zentrale sogenannte Cloud Anwendung erfolgen. Bspw. umfasst die Sensorflasche in ihrem Inneren (vorzugsweise dem Trockenbereich) die gesamte Elektronik einschl. eines WLAN-Moduls, so dass lediglich die Zuführung einer externen Stromversorgung notwendig ist.

Alternativ zu dem dargestellten und beschriebenen Ausführungsbeispiel können der Trockenbereich und der Fluidbereich auch umgekehrt angeordnet sein, d.h. der Trockenbereich kann angrenzend an den Flaschenboden 22 ausgebildet sein, während sich der Fluidbereich darüberliegend in Richtung des Flaschenhalses 28 erstreckt. In dieser Ausgestaltung kann die Elektronikeinheit 20 bspw. in den Flaschenboden 22 integriert bzw. einstückig mit ihm ausgebildet sein. Diese Ausgestaltung erlaubt einen einfachen Zugriff auf die Elektronikeinheit 20, bspw. durch öffenbare bzw. abnehmbare Ausgestaltung des Flaschenbodens 22. Aber auch in der dargestellten Ausführungsform kann der Flaschenboden 22 abnehmbar ausgebildet sein, um einen Zugang zu dem Referenzfluid 16 bzw. dem/den Temperatursensor(en) 18 zu gestatten.

Im Betrieb wird die erfindungsgemäße Sensorflasche 10 (stehend oder liegend) zwischen Weinflaschen an einem Weinlagerort wie einem Weinkeller angeordnet, so dass das in der Sensorflasche 10 befindliche Referenzfluid 16 den gleichen Umgebungsbedingungen und insbesondere Temperaturschwankungen wie der Wein in den benachbart gelagerten Weinflaschen ausgesetzt ist. In großen Weinkellern können ggf. mehrere Sensorflaschen ausgelegt werden. Zudem können unterschiedliche Sensorflaschen mit unterschiedlichen Referenzfluidzusammensetzungen und ggf. anderen Formgebungen und/oder unterschiedlichen Referenzfluiddrücken verwendet werden, um ein möglichst passendes Bild von den tatsächlich in den gelagerten Weinen herrschenden Temperaturverhältnissen und -änderungen zu gewinnen.

Zudem kann die Sensorflasche 10 wie in der Figur 1 dargestellt erfindungsgemäß weitere Messsensoren umfassen. So kann die Sensorflasche 10 bspw. einen Sensor zur Messung einer Temperatur und/oder relativen Luftfeuchtigkeit der Umgebungsluft aufweisen. Dieser Sensor kann wie in der Figur mit dem Bezugszeichen 30 angedeutet bspw. im Bereich des Flaschenhalses 28 in den Flaschenkörper 12 eingebracht sein, derart dass er einer Außenseite des Flaschenkörpers 12 zugeordnet ist. Mit einem derartigen Umgebungstemperatur- bzw. -luftfeuchtigkeitssensor 30 können weitergehende Erkenntnisse/Rückschlüsse über die Weinlagerung erzielt werden, insbesondere können auch Vergleiche über Temperaturschwankungen außerhalb der Weinflaschen und innerhalb der Weinflaschen angestellt werden. Anhand der Umgebungstemperatur und der Referenzfluidtemperatur kann bspw. die Abkühlungs- bzw. Erwärmungsgeschwindigkeit berechnet und zur Grundlage einer ggf. frühzeitigen Alarmierung gemacht werden (aus diesen Angaben lassen sich u.a. auch Aussagen zu möglichem Handlungsbedarf wie z.B. Erhöhung der Kühlung o.dgl. machen). Selbstverständlich kann der Sensor 30 auch an jeder beliebigen anderen Stelle des Flaschenkörpers 12 angebracht sein, wie bspw. der Flaschenwandung oder auch dem Flaschenboden. Der Umgebungstemperatur- bzw. -luftfeuchtigkeitssensor 30 kann aber auch eigenständig ausgebildet und an dem Flaschenkörper 12 angebracht sein, bspw. als ein über den Flaschenhals 28 zu steckendes Ringelement.

Weitere mögliche in oder an der Sensorflasche 10 vorzusehende Sensoren können ein Sensor 32 zur Messung von UV-Strahlung und/oder ein Sensor zur Messung von Erschütterungen sein. Der UV-Sensor kann wie in der Figur angedeutet im Bereich des Flaschenhalses angebracht sein. Der UV-Sensor kann entweder einer Außenseite des Flaschenkörpers zugeordnet sein, so dass die direkt auf den Flaschenkörper 12 einwirkenden Lichtverhältnisse gemessen werden. Alternativ kann der UV-Sensor auch im Innenraum 14 der Sensorflasche 10 angeordnet sein, um tatsächlich die durch die Flaschenwandung durchtretende UV-Strahlung zu messen. Der UV-Sensor kann in diesem Falle entweder in dem Trockenbereich oder auch in dem Fluidbereich angebracht sein. Das gleiche gilt für den Erschütterungssensor, der ebenfalls alternativ im Flaschenkörper 12 integriert sein kann, von außen an dem Flaschenkörper 12 angebracht oder im Innenraum 14 des Flaschenkörpers entweder in dem Trockenbereich oder dem Flugbereich angeordnet sein kann.

Schließlich kann die Sensorflasche 10 optional mindestens ein von außerhalb des Flaschenkörpers 12 sichtbares Anzeigeelement 34 aufweisen. Bei dem Anzeigeelement 34 kann es sich um eine oder mehrere Leuchtdioden handeln, die einer Bedienperson optisch direkt einen aktuellen Überwachungszustand melden, bspw. grün für einen guten Zustand (der Weintemperatur und/oder anderen Parameter), gelb für einen grenzwertigen, womöglich noch akzeptablen Zustand und rot für einen kritischen Zustand außerhalb des akzeptablen Bereichs und/oder für eine Störung. Selbstverständlich können alternativ oder ergänzend/flankierend auch andere Anzeige- bzw. Signalisierungsmöglichkeiten genutzt werden, wie bspw. ein akustisches Signal im Falle eines grenzwertigen bzw. kritischen Zustands.

Selbstverständlich kann die Sensorflasche 10 als Anzeigeelement (auch) ein (nicht dargestelltes) Display umfassen, das bspw. auf dem Flaschenkörper 12 angeordnet ist (zum Beispiel in Form eines Weinetiketts) und aktuelle Messergebnisse oder auch Messhistorien ausgibt.

Der Flaschenkörper der erfindungsgemäßen Sensorflasche kann aus jedem geeigneten und vorzugsweise weinflaschenähnlichen (insb. hinsichtlich der thermischen Leitfähigkeiten) Material bestehen. In Frage kommende Materialien umfassen Kunststoff, Glas, Kombinationen aus Kunststoff mit Glas (bspw. könnte der UV-Sensor im Innern des Flaschenkörpers hinter einem Glasauge angebracht sein, um den tatsächlichen durch Tritt von UV-Strahlung durch eine Weinflaschenwandung zu simulieren). Weitere Materialauswahlen erschließen sich dem Fachmann ohne weiteres.

Auch wenn sich die Beschreibung eines konkreten Ausführungsbeispieles auf einen Sensorbehälter in Flaschenform konzentriert, kann die Erfindung auch in anderen Behälterformen umgesetzt und verwirklicht werden. Im Hinblick auf eine Anordnung direkt im Weinregal in unmittelbarer Nachbarschaft der zu überwachenden Weinflaschen bietet sich bspw. eine zylindrische Formgebung oder Dosenform mit einem einer Weinflasche entsprechenden Durchmesser an. Aber auch quaderförmige Sensorbehälter u.a., die in oder neben einem Weinregal platzierbar sind, erfüllen den Erfindungszweck.

### Bezugszeichenliste

- 10: Sensorbehälter/Sensorflasche
- 12: Behälterkörper/Flaschenkörper
- 14: Innenraum
- 16: Referenzfluid
- 18: Temperatursensor
- 20: Elektronikeinheit
- 22: Behälterboden/Flaschenboden
- 24: Fluidbereich
- 25: Trennwand
- 26: Trockenbereich
- 28: Flaschenhals
- 30: Sensor zur Messung von Temperatur bzw. relativer Luftfeuchtigkeit von Umgebungsluft
- 32: Sensor zur Messung von UV-Strahlung bzw. Erschütterungssensor
- 34: Anzeigeelement

## Patentansprüche

1. Sensorbehälter (10) mit einem durch einen Behälterkörper (12) definierten Innenraum (14), der in einen Fluidbereich (24) und einen Trockenbereich (26) unterteilt ist, wobei in dem Fluidbereich (24) ein ein Alkohol-/Wasser-Gemisch umfassendes Referenzfluid (16) vorgesehen ist, in dem mindestens ein Temperatursensor (18) zur Messung der Temperatur an mindestens einer Stelle in dem Referenzfluid (16) angeordnet ist, und wobei in dem Trockenbereich (26) eine Elektronikeinheit (20) zur Auswertung und Übertragung der Messsignale des mindestens einen Temperatursensors (18) vorgesehen ist.

2. Sensorbehälter (10) nach Anspruch 1, der des weiteren mindestens einen einer Außenseite des Behälterkörpers (12) zugeordneten Sensor (30) zur Messung einer Temperatur und/oder relativen Luftfeuchtigkeit von Umgebungsluft umfasst.

3. Sensorbehälter (10) nach einem der voranstehenden Ansprüche, der mindestens einen weiteren Sensor (32) zur Messung von UV-Strahlung und/oder einen Erschütterungssensor umfasst.

4. Sensorbehälter (10) nach einem der voranstehenden Ansprüche, dessen Behälterkörper (12) mindestens ein von außerhalb des Behälterkörpers (12) sichtbares Anzeigeelement (34) zugeordnet ist.

5. Sensorbehälter (10) nach einem der voranstehenden Ansprüche, dessen Behälterkörper (12) eine Flaschenform aufweist.

6. Verfahren zum Überwachen von Lagerungsbedingungen alkoholhaltiger Getränke wie Wein, mit den folgenden Schritten:
- Bereitstellen eines Sensorbehälters (10) gemäß einem der Ansprüche 1 bis 5,
- Anordnen des Sensorbehälters (10) zwischen Weinflaschen an einem Weinlagerort, so dass das in der Sensorflasche (10) befindliche Referenzfluid (16) den gleichen Umgebungsbedingungen und insbesondere Temperaturschwankungen wie der Wein in den benachbart gelagerten Weinflaschen ausgesetzt ist,
- Auswerten der von den Temperatursensoren (18) empfangenen Messsignale durch die Elektronikeinheit (20) und Übertragen der Auswertungsdaten an ein außerhalb des Sensorbehälters (10) befindliches Auswertungssystem.

## Claims

1. Sensor container (10) having an interior (14) which is defined by a container body (12) and subdivided into a fluid region (24) and a dry region (26), wherein a reference fluid (16) comprising an alcohol/water mixture is provided in the fluid region (24), in which reference fluid at least one temperature sensor (18) is arranged for measuring the temperature at at least one location in the reference fluid (16), and wherein an electronics unit (20) for evaluating and transmitting the measurement signals from the at least one temperature sensor (18) is provided in the dry region (26).

2. Sensor container (10) according to Claim 1, moreover comprising at least one sensor (30) assigned to an outer side of the container body (12) and serving to measure a temperature and/or a relative humidity of ambient air.

3. Sensor container (10) according to any of the preceding claims, comprising at least one further sensor (32) for measuring UV radiation and/or a vibration sensor.

4. Sensor container (10) according to any of the preceding claims, whose container body (12) is assigned at least one display element (34) visible from outside of the container body (12).

5. Sensor container (10) according to any of the preceding claims, whose container body (12) has a bottle shape.

6. Method for monitoring storage conditions of alcoholic drinks such as wine, including the following steps:
- providing a sensor container (10) according to any of Claims 1 to 5,
- arranging the sensor container (10) between bottles of wine at a wine storage location, with the result that the reference fluid (16) situated in the sensor bottle (10) is exposed to the same ambient conditions and, in particular, the same temperature variations as the wine in the adjacently stored bottles of wine,
- evaluating the measurement signals received from the temperature sensors (18) by means of the electronics unit (20) and transmitting the evaluation data to an evaluation system located outside of the sensor container (10) .

## Revendications

1. Récipient à capteur (10) avec un espace intérieur (14), défini par un corps de récipient (12), qui est divisé en une zone à fluide (24) et une zone sèche (26), dans lequel il est prévu, dans la zone à fluide (24), un fluide de référence (16) comprenant un mélange alcool/eau dans lequel est agencé un capteur de température (18) destiné à mesurer la température à au moins un endroit dans le fluide de référence (16), et dans lequel il est prévu, dans la zone sèche (26), une unité électronique (20) destinée à évaluer et à transmettre les signaux de mesure dudit au moins un capteur de température (18).

2. Récipient à capteur (10) selon la revendication 1, qui comprend en outre au moins un capteur (30) associé à un côté extérieur du corps de récipient (12), destiné à mesurer une température et/ou une humidité relative de l'air ambiant.

3. Récipient à capteur (10) selon l'une des revendications précédentes, qui comprend au moins un capteur supplémentaire (32) destiné à mesurer un rayonnement UV, et/ou un capteur de secousses.

4. Récipient à capteur (10) selon l'une des revendications précédentes, dont le corps de récipient (12) est associé à au moins un élément d'affichage (34) visible depuis l'extérieur du corps de récipient (12).

5. Récipient à capteur (10) selon l'une des revendications précédentes, dont le corps de récipient (12) présente une forme de bouteille.

6. Procédé de surveillance de conditions de stockage de boissons alcoolisées, comme le vin, comprenant les étapes suivantes consistant à :
- fournir un récipient à capteur (10) selon l'une des revendications 1 à 5,
- agencer le récipient à capteur (10) entre des bouteilles de vin dans un lieu de stockage de vin de telle sorte que le fluide de référence (16) se trouvant dans la bouteille à capteur (10) est exposé aux mêmes conditions ambiantes, et en particulier aux mêmes fluctuations de température, que le vin dans les bouteilles de vin stockées à proximité,
- analyser les signaux de mesure, reçus par les capteurs de température (18), via l'unité électronique (20), et transmettre les données d'analyse à un système d'analyse se trouvant à l'extérieur du récipient à capteur (10).
